(19) Europäisches Patentamt
European Patent Office
Office européen des brevets

(11) **EP 1 895 270 B1**

(12) **FASCICULE DE BREVET EUROPEEN**

(45) Date de publication et mention
de la délivrance du brevet:
**01.06.2011 Bulletin 2011/22**

(51) Int Cl.:
**G01C 19/56** (2006.01)

(21) Numéro de dépôt: **07354045.2**

(22) Date de dépôt: **07.08.2007**

(54) **Microsystème, plus particulièrement microgyromètre, avec élément de détection à électrodes capacitives**

Mikrosystem, insbesondere Mikro-Gyroskop, mit Detektionselement mit kapazitiven Elektroden

Microsystem, in particular a microgyrometer, with a detection element having capacitive electrodes

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **01.09.2006 FR 0607692**

(43) Date de publication de la demande:
**05.03.2008 Bulletin 2008/10**

(73) Titulaire: **Commissariat à l'Énergie Atomique et aux Énergies Alternatives**
**75015 Paris (FR)**

(72) Inventeur: **Diem, Bernard**
**38130 Echirolles (FR)**

(74) Mandataire: **Hecké, Gérard et al**
**Cabinet Hecké**
**10, rue d'Arménie**
**Europole**
**BP 1537**
**38025 Grenoble Cedex 1 (FR)**

(56) Documents cités:
**WO-A-01/22094          US-A1- 2001 029 784**
**US-A1- 2006 156 815    US-B2- 6 752 017**

**Description**

**Domaine technique de l'invention**

L'invention concerne un microsystème réalisé dans un substrat plan et comportant :

- au moins deux masses oscillantes, reliées au substrat par des moyens élastiques de suspension,
- des moyens d'excitation desdites masses oscillantes, selon une direction d'excitation prédéterminée,
- et des moyens de détection du déplacement desdites masses oscillantes, selon une direction de mesure, perpendiculaire à ladite direction d'excitation,

lesdits moyens de détection comportant un cadre d'excitation, associé à chaque masse oscillante, et un élément de détection mobile, entouré par le cadre d'excitation correspondant et comportant une pluralité d'électrodes mobiles, et des premier et second jeux d'électrodes fixes, interconnectées et solidaires du substrat sur lequel elles sont formées, chaque électrode mobile étant disposée entre des électrodes fixes associées des premier et second jeux, pour former deux condensateurs différentiels variables.

**État de la technique**

Dans le domaine des microsystèmes, du type capteurs ou actionneurs, il est connu d'utiliser un microgyromètre, pour la mesure inertielle de la vitesse de rotation. Un microgyromètre utilise classiquement la force de Coriolis, générée par une masse en vibration sous l'effet d'une rotation, pour mesurer la vitesse. La force de Coriolis est engendrée dans une direction perpendiculaire à la vibration d'excitation et à l'axe de rotation.

Un microgyromètre est un composant microusiné, de préférence, dans le plan d'un substrat, et comportant classiquement au moins deux masses oscillantes, entraînées par tout moyen d'excitation approprié dans une même orientation d'oscillation, mais dans un sens de déplacement opposé (déplacement en opposition de phase). Les masses oscillantes intègrent classiquement des éléments de détection dans leur structure, destinés à la détection de la force de Coriolis.

Il existe deux grandes familles de détection. La première famille consiste à une détection dans le plan du substrat sur lequel est réalisé le microgyromètre, avec un axe de rotation perpendiculaire au substrat. La seconde famille consiste à une détection perpendiculaire au plan du substrat, avec un axe de rotation dans le plan du substrat.

Pour des raisons technologiques de simplicité et de coût, un microgyromètre à détection dans le plan du substrat est le plus souvent utilisé. Le brevet US 5635638 décrit notamment un microgyromètre à excitation et détection dans le plan du substrat, avec détection par des peignes capacitifs interdigités situés entre les deux masses oscillantes. Cependant, une asymétrie du système est observée, ce qui conduit à des mouvements beaucoup moins maîtrisés des masses oscillantes et une détection très difficile à réaliser.

Les documents WO-A-2004042324 et US 5728936 décrivent chacun un microgyromètre comportant des moyens de détection sous forme de peignes capacitifs interdigités, un peigne fixe et un peigne mobile, permettant d'effectuer la détection dans une seule direction parallèle au plan du substrat. Cependant, la détection s'avère peu efficace, car elle ne participe pas à la masse inertielle du microgyromètre et ce type d'éléments de détection réduit considérablement la sensibilité du microgyromètre. Il en résulte un microgyromètre très difficile à mettre en oeuvre.

Les microgyromètres décrits ci-dessus présentent tous des éléments de détection à base de peignes capacitifs interdigités engendrant une détection peu efficace, notamment à cause des variations parasites de la capacité. Le fonctionnement de tels microgyromètres n'est donc pas optimal.

Pour remédier à ces inconvénients, le brevet US 6752017 décrit notamment un microgyromètre comprenant un système de détection capacitive avec des électrodes fixes et des électrodes mobiles formant des condensateurs différentiels variables. Le système de détection comporte un cadre d'excitation, associé à chaque masse oscillante, et un élément de détection mobile, entouré par le cadre d'excitation correspondant et comportant une pluralité d'électrodes mobiles. Le système de détection comporte également des premier et second jeux d'électrodes fixes et chaque électrode mobile est disposée entre des électrodes fixes associées des premier et second jeux, pour former deux condensateurs différentiels variables. Les électrodes fixes sont solidaires du substrat sur lequel elles sont formées, et sont interconnectées par une couche conductrice, classiquement réalisée en polysilicium, déposée sur le substrat et isolée électriquement du substrat par une couche intermédiaire, par exemple en nitrure de silicium $Si_3N_4$, qui doit être sélective en termes de gravure vis-à-vis d'une couche sacrificielle en oxyde de silicium $SiO_2$ destinée à la formation des électrodes.

Cependant, un tel système de détection, réalisé par des procédés classiques de fabrication en microélectronique, associé à des couches en polysilicium, ne donne pas de garanties suffisantes en termes d'interconnexion et de conductivité électrique. Les couches conductrices d'interconnexion étant notamment réalisées au début du procédé de fabrication, elles doivent être compatibles avec les étapes suivantes du procédé. En particulier, elles doivent pouvoir supporter des températures élevées, typiquement supérieures à 700°C. Une couche conductrice en silicium polycristallin permet d'assurer cette fonction, mais la conductivité du silicium polycristallin est limitée, inférieure à celle d'un matériau métallique.

Par ailleurs, l'isolation électrique réalisée par un diélectrique tel que le nitrure de silicium $Si_3N_4$ conduit à des capacités parasites importantes par rapport au substrat. La constante diélectrique du nitrure de silicium (définie par $C \approx \varepsilon_{diel} \dfrac{S}{e}$) est élevée et il est difficile d'augmenter l'épaisseur à cause des contraintes mécaniques de la couche de nitrure. Enfin, le dépôt d'une couche de nitrure est long et donc coûteux.

## Objet de l'invention

L'invention a pour but de remédier à l'ensemble des inconvénients précités et a pour objet la réalisation d'un microsystème, plus particulièrement un microgyromètre, comportant des moyens de détection permettant de s'affranchir des effets de variations parasites de la capacité, lors de l'excitation de ses masses oscillantes, tout en optimisant la conductivité électrique des électrodes du microgyromètre.

Ce but est atteint par un microsystème selon les revendications annexées et plus particulièrement par le fait que les électrodes fixes de chaque jeu sont interconnectées par l'intermédiaire de barres d'interconnexion en matériau électriquement conducteur, s'étendant au-dessus des électrodes fixes, dans un plan sensiblement parallèle au substrat.

## Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

La figure 1 représente schématiquement une vue de dessus en coupe d'un mode particulier de réalisation d'un microsystème selon l'invention, plus particulièrement un microgyromètre, avec deux masses oscillantes comportant chacune des éléments de détection associés.
La figure 2 représente schématiquement une vue de dessus partielle très agrandie en coupe d'une masse oscillante du microsystème selon la figure 1. Les figures 3 et 4 représentent très schématiquement les éléments de détection associés à une masse oscillante de variantes de réalisation d'un microsystème selon l'invention.

## Description de modes particuliers de réalisation

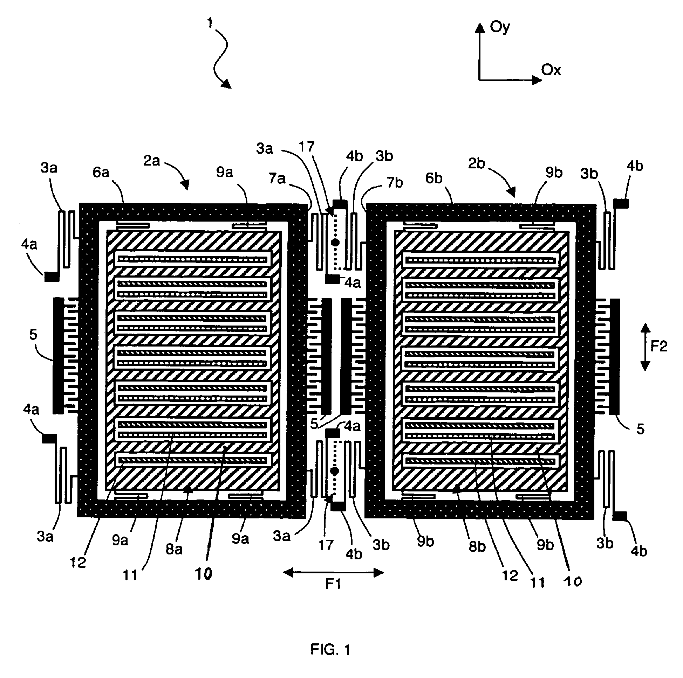

En référence aux figures 1 à 4, le microsystème 1 est, plus particulièrement, un microgyromètre destiné à la détermination d'une vitesse de rotation, par la mesure de la vibration de masses oscillantes 2 couplées mécaniquement. Le microgyromètre 1 comporte, plus particulièrement, des moyens de détection permettant notamment de s'affranchir des effets de variation parasite de la capacité, lors du déplacement des masses oscillantes 2 dans une direction d'excitation Ox, et destinés à mesurer la force de Coriolis engendrée par la vibration des masses oscillantes. Le microgyromètre 1 est réalisé, par exemple, par micro-usinage dans un substrat plan (non représenté sur les figures 1 à 4 pour des raisons de clarté), définissant le plan de représentation des figures 1 à 4.

Dans le mode particulier de réalisation représenté sur la figure 1, le microgyromètre 1 comporte deux masses oscillantes 2a et 2b, de forme générale sensiblement rectangulaire, et, de préférence, identiques et symétriques sur elles-mêmes et l'une par rapport à l'autre. Chaque masse oscillante 2a, 2b est suspendue élastiquement sur le substrat par l'intermédiaire de ressorts de suspension 3a, 3b.

Dans le mode particulier de réalisation de la figure 1, les ressorts de suspension 3a, 3b sont des ressorts en forme de serpentin présentant, dans un même plan parallèle au substrat, une ou plusieurs branches successives en U. Les ressorts de suspension 3a, 3b sont respectivement ancrés à une première extrémité sur la masse oscillante correspondante 2a ou 2b et à une seconde extrémité sur le substrat, par l'intermédiaire de points d'ancrage 4a, 4b correspondants.

Chaque masse oscillante 2a, 2b est excitée et entraînée en vibration dans une direction d'excitation Ox, selon la flèche F1 (figure 1), par exemple par l'intermédiaire de peignes capacitifs interdigités 5, disposés de part et d'autre de chaque masse oscillante 2a, 2b.

Comme représenté sur la figure 1, chaque masse oscillante 2a, 2b comporte, de préférence, un cadre d'excitation 6a, 6b, de préférence de même forme que la masse oscillante 2a, 2b correspondante et sur lequel sont fixées les premières extrémités des ressorts de suspension 3a, 3b correspondants et les peignes capacitifs interdigités 5 d'excitation. Les cadres 6a, 6b présentent ainsi deux côtés opposés, respectivement 7a, 7b, perpendiculaires à la direction d'excitation Ox. Les côtés opposés 7a, 7b sont notamment destinés à être couplés mécaniquement et présentent chacun, respectivement et de préférence, deux ressorts de suspension 3a, 3b.

Les cotés opposés 7a, 7b des masses oscillantes 2a, 2b du microgyromètre 1 sont avantageusement reliés par des moyens de couplage 17 particuliers illustrés schématiquement sur la figure 1 et décrits plus en détail dans la demande de brevet internationale WO-A-2007/077353.

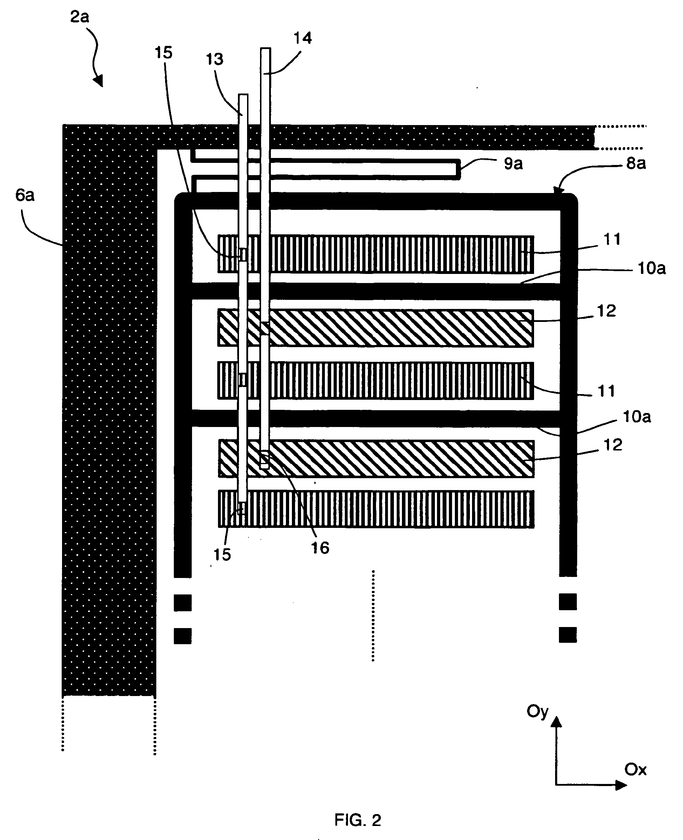

Les masses oscillantes 2a, 2b comportent chacune également des moyens de détection, participant à la masse inertielle du microgyromètre 1, et, de préférence, identiques pour les deux masses oscillantes 2a, 2b. Sur la figure 2, seule une partie de la masse oscillante 2a est représentée. Dans la description ci-dessous des moyens de détection, les références relatives à la masse oscillante 2a s'appliquent également à la masse oscillante 2b.

Sur la figure 2, la masse oscillante 2a comporte un élément de détection mobile 8a, entouré par le cadre d'excitation 6a correspondant et relié au cadre d'excitation 6a, de préférence par l'intermédiaire de quatre ressorts de rappel élastique 9a (figure 1), qui autorisent un degré de liberté selon l'axe Oy. L'élément de détection mobile 8a vibre dans la direction Oy, selon la flèche F2 (figure 1), définissant l'axe de détection et de mesure de la force de Coriolis, engendrée par la vibration des masses oscillantes 2a, 2b.

À titre d'exemple, les ressorts de rappel élastique 9a sont des ressorts en forme de serpentin présentant, dans un même plan parallèle au substrat, une ou plusieurs branches successives en U. Les ressorts de rappel 9a sont ancrés à une première extrémité sur le cadre d'excitation 6a et à une seconde extrémité sur l'élément de détection mobile 8a.

L'élément de détection mobile 8a comporte une pluralité de branches transversales constituant une pluralité d'électrodes mobiles 10a et le microgyromètre 1 comporte deux jeux d'électrodes fixes 11, 12, à savoir un premier jeu d'électrodes fixes 11, représentées par des hachures verticales sur les figures 1 et 2, et un second jeu d'électrodes fixes 12, représentées par des hachures inclinées sur les figures 1 et 2. Les électrodes fixes 11, 12 sont solidaires du substrat sur lequel elles sont formées, sont isolées du substrat par l'intermédiaire, par exemple, d'une couche intermédiaire en nitrure de silicium $Si_3N_4$ (non représentée) et sont disposées alternativement les unes à la suite des autres sur le substrat (figures 1 à 4). Les électrodes fixes 11, 12 d'un même jeu sont interconnectées les unes avec les autres (figure 2).

Chaque électrode mobile 10a de l'élément de détection mobile 8a est disposée entre une électrode fixe 11 du premier jeu d'électrodes et une électrode fixe 12 associée du second jeu d'électrodes, pour former deux condensateurs différentiels variables. L'entrefer entre les électrodes fixes 11, 12 et l'élément de détection mobile 8a correspondant est donc variable, lors du déplacement de l'élément de détection mobile 8a selon l'axe de détection et de mesure Oy (figure 2).

Dans le mode particulier de réalisation des figures 1 et 2, les électrodes fixes 11 et 12 sont toutes de même longueur, parallèles à la direction d'excitation Ox et disposées alternativement les unes à la suite des autres selon la direction de détection et de mesure Oy. L'élément de détection mobile 8a est constitué par un cadre de forme rectangulaire, les branches transversales constituant les électrodes mobiles 10a étant identiques et de même longueur.

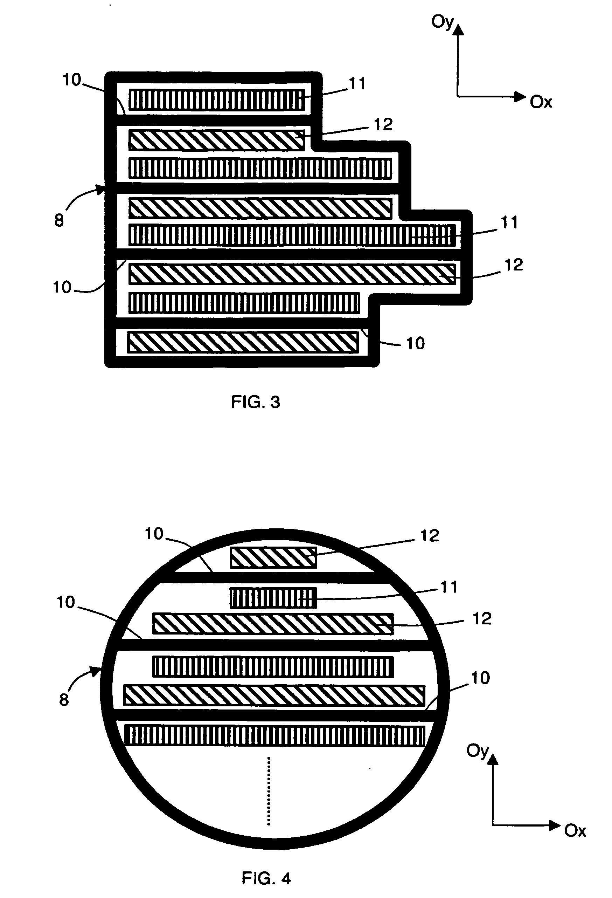

Sur les figures 3 et 4, les variantes de réalisation du microgyromètre 1 se distinguent du microgyromètre 1 représenté sur les figures 1 et 2 par la forme de ses masses oscillantes 2, de ses cadres d'excitation 6, de ses éléments de détection mobiles 8 et de ses électrodes fixes 11, 12. Sur les figures 3 et 4, uniquement un élément de détection mobile 8 associé aux deux jeux d'électrodes fixes 11, 12 est représenté pour des raisons de clarté.

Sur la figure 3, l'élément de détection mobile 8 peut être un cadre de forme générale asymétrique. Les électrodes mobiles 10 de l'élément de détection mobile 8 constituent alors des branches transversales de longueur différente, coopérant chacune avec une électrode fixe 11 du premier jeu d'électrodes associée à une électrode fixe 12 de même longueur du second jeu d'électrodes. Les électrodes fixes 11 ou 12 d'un même jeu peuvent donc être de longueurs différentes, selon leur position le long de l'axe de détection et de mesure Oy.

Sur la figure 4, l'élément de détection mobile 8 est un cadre de forme générale circulaire, entourant l'ensemble des électrodes fixes 11, 12 associées. L'élément de détection mobile 8 comprend des branches transversales constituant les électrodes mobiles 10 coopérant avec les électrodes fixes 11,12 pour former des condensateurs différentiels variables. Les électrodes fixes 11, 12 et les électrodes mobiles 10 ont alors des longueurs différentes, les électrodes 11, 12 situées sensiblement au centre de l'élément de détection mobile 8 étant notamment plus longues que les électrodes fixes 11, 12 situées sensiblement au bord de l'élément de détection 8, selon la direction de mesure Oy.

D'une manière générale, quelle que soit la forme du cadre constituant un élément de détection mobile 8, les électrodes fixes 11 et 12 associées à une branche transversale de l'élément de détection mobile 8 ont une longueur inférieure ou égale à l'électrode mobile 10 correspondante (figures 1 à 4), laquelle dépasse, de préférence, de part et d'autre des électrodes fixes 11, 12 associées, pour former des condensateurs différentiels variables. Les électrodes fixes 11 et 12 sont alors appelées à recouvrement total, à savoir les deux électrodes fixes 11, 12 associées sont de même longueur et leur surface en regard de l'électrode mobile 10 correspondante est toujours identique, lors du déplacement de l'électrode de détection mobile 8.

Ainsi, lors d'une rotation du substrat selon l'axe Oz, perpendiculaire au plan Ox/Oy définis par le substrat, chaque élément de détection mobile 8a, 8b va vibrer et se déplacer selon la direction Oy, à la même fréquence que l'excitation de la masse oscillante 2a, 2b correspondante, selon la direction d'excitation Ox. Ce déplacement est alors mesuré par les électrodes fixes 11 et 12, coopérant avec les électrodes mobiles 10 des éléments de détection mobiles 8a, 8b associés, qui permettent ensuite de déterminer la vitesse de rotation.

Les électrodes fixes 11, 12 et les éléments de détection mobiles 8a, 8b du microgyromètre 1 permettent ainsi de s'affranchir des effets de variation parasite de la capacité, lors de l'excitation des masses oscillantes 2a, 2b, selon la direction d'excitation Ox. Il en résulte une efficacité optimale, en termes de détection et de mesure de la vitesse de rotation, et un fonctionnement optimisé du microgyromètre associé.

Par ailleurs, comme représenté plus particulièrement sur la figure 2, l'ensemble des électrodes fixes 11 du premier jeu et l'ensemble des électrodes fixes 12 du second jeu sont interconnectées, respectivement, par l'intermédiaire de barres d'interconnexion 13, 14 en matériau électriquement conducteur (non représentées sur les figures 1, 3 et 4 pour des raisons de clarté). Les barres d'interconnexion 13, 14 sont, de préférence, isolées du substrat, pour permettre notamment d'effectuer des mesures par l'intermédiaire de contacts de mesures accessibles de l'extérieur du microgyromètre 1.

Les barres d'interconnexion 13, 14, plus particulièrement appelées « ponts à air», s'étendent au-dessus des jeux d'électrodes fixes 11, 12 et sont disposées dans un plan sensiblement parallèle au substrat. Les barres d'interconnexion 13, 14 sont fixées aux électrodes fixes 11, 12 par l'intermédiaire, respectivement, de plots 15, 16 en matériau électriquement conducteur. À titre d'exemple, les barres d'interconnexion 13, 14 et les plots 15, 16 correspondants forment une seule pièce conductrice.

Dans une variante de réalisation, les barres d'interconnexion 13, 14 sont réalisées séparément et sont destinées à adhérer sur les plots 15, 16, réalisés à partir d'un matériau permettant d'optimiser le contact ohmique sur les électrodes fixes 11, 12, réalisées en silicium. À titre d'exemple, le matériau des plots 15, 16 est choisi pour obtenir un bon contact ohmique sur les électrodes fixes 11, 12 correspondantes, par exemple du titane, tandis que le matériau des barres d'interconnexion 13, 14 doit avoir une bonne conductivité électrique et une bonne tenue mécanique.

Quel que soit le mode de réalisation, les barres d'interconnexion 13, 14 sont en matériau résistant à de hautes températures et présentant de bonnes caractéristiques mécaniques. À titre d'exemple, les barres d'interconnexion 13, 14 peuvent être en polysilicium dopé, en alliage de silicium et germanium SiGe dopé, en silicium monocristallin ou, de préférence, en métal. À titre d'exemple, les barres d'interconnexion 13, 14 peuvent être en aluminium, en nickel, en or, en cuivre, etc.

Un exemple de procédé de fabrication de telles barres d'interconnexion 13, 14 va être décrit plus en détail en regard de la figure 2. La première étape consiste à former les différents éléments constituant la structure de microgyromètre (masses oscillantes, cadres d'excitation, électrodes fixes et électrodes mobiles). Dans une seconde étape, une couche sacrificielle, par exemple en TetraEthylOrthoSilicate (TEOS), est déposée sur le microgyromètre, puis recuite à 1000°C environ, pour fermer les tranchées entre les électrodes fixes 11,12. La couche sacrificielle est ensuite gravée, pour délimiter l'emplacement des plots 15, 16 destinés à supporter les barres d'interconnexion 13, 14. Puis, un dépôt métallique est réalisé et gravé, pour former les barres d'interconnexion 13, 14, par exemple par l'intermédiaire de masques. Enfin, la couche sacrificielle initialement déposée est gravée pour libérer le microgyromètre, avec les barres d'interconnexion 13, 14 s'étendant au-dessus des électrodes fixes 11, 12.

Ainsi, quel que soit le mode de fabrication du microgyromètre et quelle que soit la forme des éléments de détection mobile 8, de telles barres d'interconnexion 13, 14 permettent notamment d'obtenir une conductivité électrique optimale et de réduire les contraintes mécaniques, notamment en raison de leur flexibilité.

La réalisation des barres d'interconnexion en dernier sur le dessus du microgyromètre offre notamment une plus grande souplesse et une plus grande flexibilité dans le choix du matériau utilisé pour ces barres d'interconnexion (meilleur conducteur possible), tout en étant compatible avec des procédés classiques de microélectronique (réduction des contraintes de compatibilité). Par ailleurs, comme les barres d'interconnexion sont « en l'air », leurs capacités parasites par rapport au substrat sont fortement réduites.

L'invention n'est pas limitée aux différents modes de réalisation décrits ci-dessus. Les peignes capacitifs interdigités 5 d'excitation des masses oscillantes 2a, 2b peuvent être remplacés par tout autre moyen d'excitation, entraînant la vibration des masses oscillantes 2a, 2b dans la direction d'excitation Ox, par exemple des moyens électrostatiques, des moyens électromagnétiques ou des moyens piézoélectriques.

Les ressorts de suspension 3a, 3b peuvent être remplacés par tout autre moyen élastique de suspension, tant qu'il permet le couplage mécanique des masses oscillantes 2a, 2b.

Les ressorts de rappel 9a, 9b peuvent être remplacés par tout autre moyen élastique de rappel, tant qu'il permet le déplacement de l'élément de détection mobile 8a, 8b associé à l'intérieur du cadre d'excitation 6a, 6b correspondant, à savoir tant qu'il est apte à transmettre le mouvement d'excitation sans déformation selon la direction Ox, tout en permettant le déplacement selon la direction Oy.

Les cadres constituant les éléments de détection mobiles 8 peuvent avoir une tout autre forme et les électrodes fixes 11, 12 peuvent être de longueurs différentes, tant qu'elles permettent de former des condensateurs différentiels variables avec les électrodes mobiles 10 associées des éléments de détection mobile 8. Les barres d'interconnexion 13, 14 peuvent être en tout autre métal conducteur et résistant à de hautes températures.

Les moyens de détection particuliers décrits aux figures 1 à 4 peuvent s'intégrer dans tout type de microsystème, du type actionneur ou capteur.

**Revendications**

1. Microsystème (1) réalisé dans un substrat plan et comportant :

   - au moins deux masses oscillantes (2a, 2b), reliées au substrat par des moyens élastiques de suspension (3a, 3b),
- des moyens d'excitation (5) desdites masses oscillantes (2a, 2b), selon une direction d'excitation prédéterminée (Ox),
- et des moyens de détection du déplacement desdites masses oscillantes (2a, 2b), selon une direction de mesure (Oy), perpendiculaire à ladite direction d'excitation (Ox),

lesdits moyens de détection comportant un cadre d'excitation (6a, 6b), associé à chaque masse oscillante (2a, 2b), et un élément de détection mobile (8a, 8b), entouré par le cadre d'excitation (6a, 6b) correspondant et comportant une pluralité d'électrodes mobiles (10), et des premier et second jeux d'électrodes fixes (11, 12), interconnectées et solidaires du substrat sur lequel elles sont formées, chaque électrode mobile (10) étant disposée entre des électrodes fixes (11, 12) associées des premier et second jeux, pour former deux condensateurs différentiels variables, le microsystème étant **caractérisé en ce que** les électrodes fixes (11, 12) de chaque jeu sont interconnectées par l'intermédiaire de barres d'interconnexion (13, 14) en matériau électriquement conducteur, s'étendant au-dessus des électrodes fixes (11, 12), dans un plan sensiblement parallèle au substrat.

2. Microsystème selon la revendication 1, **caractérisé en ce que** les barres d'interconnexion (13, 14) sont fixées par des plots (15, 16) aux électrodes fixes (11, 12).

3. Microsystème selon l'une des revendications 1 et 2, **caractérisé en ce que** les barres d'interconnexion (13, 14) sont en matériau résistant à de hautes températures.

4. Microsystème selon l'une quelconque des revendications 1 à 3, **caractérisé en ce que** les barres d'interconnexion (13, 14) sont en polysilicium ou en alliage de silicium et germanium.

5. Microsystème selon l'une quelconque des revendications 1 à 3, **caractérisé en ce que** les barres d'interconnexion (13, 14) sont en métal.

6. Microsystème selon la revendication 5, **caractérisé en ce que** le métal est choisi parmi l'aluminium, le nickel, l'or, le cuivre.

7. Microsystème selon l'une quelconque des revendications 1 à 6, **caractérisé en ce que** les électrodes fixes (11, 12) sont parallèles à la direction d'excitation (Ox) et les électrodes mobiles (10) sont des branches transversales d'un cadre constituant chaque élément de détection mobile (8a, 8b).

8. Microsystème selon l'une quelconque des revendications 1 à 7, **caractérisé en ce que** chaque élément de détection mobile (8a, 8b) est un cadre de forme rectangulaire.

9. Microsystème selon l'une quelconque des revendications 1 à 7, **caractérisé en ce que** chaque élément de détection mobile (8a, 8b) est un cadre de forme circulaire.

10. Microsystème selon l'une quelconque des revendications 1 à 7, **caractérisé en ce que** chaque élément de détection mobile (8a, 8b) est un cadre de forme asymétrique.

## Claims

1. Microsystem (1) provided in a flat substrate and comprising:

    - at least two oscillating masses (2a, 2b) coupled to the substrate by flexible suspension means (3a, 3b),
    - excitation means (5) for exciting said oscillating masses (2a, 2b) in a predetermined excitation direction (Ox),
    - and detection means for detecting movement of said oscillating masses (2a, 2b) in a measuring direction (Oy) perpendicular to said excitation direction (Ox),

    said detection means comprising an excitation frame (6a, 6b) associated with each oscillating mass (2a, 2b), and a mobile detection element (8a, 8b) surrounded by the corresponding excitation frame (6a, 6b) and comprising a plurality of mobile electrodes (10), and first and second sets of interconnected fixed electrodes (11, 12) fixedly secured to the substrate on which they are formed, each mobile electrode (10) being arranged between associated fixed electrodes (11, 12) of the first and second sets to form two variable differential capacitors, the microsystem being **characterized in that** the fixed electrodes (11, 12) of each set are interconnected by means of interconnection bars (13, 14) made of electrically conducting material, extending above the fixed electrodes (11, 12) in a plane substantially parallel to the substrate.

2. Microsystem according to claim 1, **characterized in that** the interconnection bars (13, 14) are fixed by pads (15, 16) to the fixed electrodes (11, 12).

3. Microsystem according to one of claims 1 and 2, **characterized in that** the interconnection bars (13, 14) are made of a material resistant to high temperatures.

**4.** Microsystem according to any one of claims 1 to 3, **characterized in that** the interconnection bars (13, 14) are made of polysilicon or of silicon and germanium alloy.

**5.** Microsystem according to any one of claims 1 to 3, **characterized in that** the interconnection bars (13, 14) are made of metal.

**6.** Microsystem according to claim 5, **characterized in that** the metal is selected from aluminium, nickel, gold, and copper.

**7.** Microsystem according to any one of claims 1 to 6, **characterized in that** the fixed electrodes (11, 12) are parallel to the excitation direction (Ox) and the mobile electrodes (10) are transverse branches of a frame constituting each mobile detection element (8a, 8b).

**8.** Microsystem according to any one of claims 1 to 7, **characterized in that** each mobile detection element (8a, 8b) is a frame of rectangular shape.

**9.** Microsystem according to any one of claims 1 to 7, **characterized in that** each mobile detection element (8a, 8b) is a frame of circular shape.

**10.** Microsystem according to any one of claims 1 to 7, **characterized in that** each mobile detection element (8a, 8b) is a frame of asymmetric shape.

**Patentansprüche**

**1.** Mikrosystem (1), das in einem ebenen Substrat hergestellt ist und umfasst:

- mindestens zwei Schwingmassen (2a, 2b), die über elastische Aufhängungsmittel (3a, 3b) mit dem Substrat verbunden sind,
- Mittel zum Erregen (5) der genannten Schwingmassen (2a, 2b) in einer vorbestimmten Erregungsrichtung (Ox),
- und Mittel zum Erfassen der Bewegung der genannten Schwingmassen (2a, 2b) in einer Messrichtung (Ox), die quer zur genannten Erregungsrichtung (Ox) verläuft,

welche Erfassungsmittel einen Erregungsrahmen (6a, 6b) für jede Schwingmasse (2a, 2b) umfassen, und ein bewegliches Element (8a, 8b), das von dem entsprechenden Erregungsrahmen (6a, 6b) umgeben ist und eine Mehrzahl beweglicher Elektroden (10) umfasst, und einen ersten und einen zweiten Satz fester Elektroden (11, 12), die miteinander und mit dem Substrat fest verbunden sind, auf dem sie gebildet sind, wobei jede bewegliche Elektrode (10) zwischen zusammengehörigen festen Elektroden (11, 12) des ersten und zweiten Satzes angeordnet ist, um zwei variable Differenzial-Kondensatoren zu bilden, wobei das Mikrosystem **dadurch gekennzeichnet ist, dass** die festen Elektroden (11, 12) jedes Satzes mittels Verbindungsstangen (13, 14) aus elektrisch leitendem Material miteinander verbunden sind, die sich über den festen Elektroden (11, 12) auf einer zum Substrat im Wesentlichen parallelen Ebene erstrecken.

**2.** Mikrosystem nach Anspruch 1, **dadurch gekennzeichnet, dass** die Verbindungsstangen (13, 14) mittels Kontakten (15, 16) an den festen Elektroden (11, 12) befestigt sind.

**3.** Mikrosystem nach einem der Ansprüche 1 und 2, **dadurch gekennzeichnet, dass** die Verbindungsstangen (13, 14) aus hochtemperaturbeständigem Material bestehen.

**4.** Mikrosystem nach einem der Ansprüche 1 bis 3, **dadurch gekennzeichnet, dass** die Verbindungsstangen (13, 14) aus Polysilizium oder einer Silizium-Germanium-Legierung bestehen.

**5.** Mikrosystem nach einem der Ansprüche 1 bis 3, **dadurch gekennzeichnet, dass** die Verbindungsstangen (13, 14) aus Metall sind.

**6.** Mikrosystem nach Anspruch 5, **dadurch gekennzeichnet, dass** das Metall ausgewählt ist aus Aluminium, Nickel, Gold, Kupfer.

**7.** Mikrosystem nach einem der Ansprüche 1 bis 6, **dadurch gekennzeichnet, dass** die festen Elektroden (11, 12) zur Erregungsrichtung (Ox) parallel sind und die beweglichen Elektroden (10) Querstreben eines Rahmens sind, der die jeweiligen beweglichen Erfassungselemente (8a, 8b) bildet.

**8.** Mikrosystem nach einem der Ansprüche 1 bis 7, **dadurch gekennzeichnet, dass** jedes bewegliche Erfassungselement (8a, 8b) ein rechteckiger Rahmen ist.

**9.** Mikrosystem nach einem der Ansprüche 1 bis 7, **dadurch gekennzeichnet, dass** jedes bewegliche Erfassungselement (8a, 8b) ein kreisförmiger Rahmen ist.

**10.** Mikrosystem nach einem der Ansprüche 1 bis 7, **dadurch gekennzeichnet, dass** jedes bewegliche Erfassungselement (8a, 8b) ein asymmetrischer Rahmen ist.

FIG. 1

FIG. 2

FIG. 3

FIG. 4

**EP 1 895 270 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5635638 A
- WO 2004042324 A
- US 5728936 A
- US 6752017 B
- WO 2007077353 A